**Europäisches Patentamt**

**European Patent Office**

**Office européen des brevets**

(11) Publication number : **0 550 287 A2**

# EUROPEAN PATENT APPLICATION

(21) Application number : **92311899.6**

(51) Int. Cl.⁵ : **G06F 9/38**

(22) Date of filing : **31.12.92**

(30) Priority : **02.01.92 US 816178**

(43) Date of publication of application :
**07.07.93 Bulletin 93/27**

(84) Designated Contracting States :
**AT BE CH DE DK ES FR GB GR IE IT LI LU MC NL PT SE**

(71) Applicant : **AMDAHL CORPORATION**
**1250 East Arques Avenue**
**Sunnyvale California 94086 (US)**

(72) Inventor : **Norrie, Christopher I.W.**
**2358 Warfield Way, Unit C**
**San Jose, California 95122 (US)**

(74) Representative : **Crawford, Andrew Birkby et al**
**A.A. THORNTON & CO. Northumberland**
**House 303-306 High Holborn**
**London WC1V 7LE (GB)**

(54) **Computer system having high performance processing for program status word (PSW) key-setting instructions.**

(57) A computer system which completes the Set PSW Key from Address (SPKA) instruction in two I-Unit pipeline flows in those cases where the new key value should not cause a protection exception to be generated by the instruction stream. In those cases where SPKA should cause such an exception, the appropriate action is taken to obtain the correct results. After a SPKA instruction, subsequent instructions are processed even though they are required to access the new key value, PSW KEY$_N$, provided by the SPKA instruction. For operand accesses before that new key value is accepted as the architecturally defined key, PSW KEY$_A$, a working copy of the SPKA new key value, PSW KEY$_N$, is used for operand accesses until the architectural defined PSW key, PSW KEY$_A$, is updated.

EP 0 550 287 A2

BACKGROUND OF THE INVENTION:

The present invention relates to the field of computers and particularly to computers having central processing units (CPU's) that operate in accordance with the IBM ESA/390 architecture.

ESA/390 architecture computers are controlled in part by a Program Status Word (PSW). The program-status word (PSW) includes the instruction address, condition code, and other information used to control instruction sequencing and to determine the state of the computer. The active or controlling PSW is called the current PSW. It governs the program currently being executed.

The CPU has an interruption capability, which permits the CPU to switch rapidly to another program in response to exception conditions and external stimuli. When an interruption occurs, the CPU places the current PSW in an assigned storage location, called the old-PSW location, for the particular class of interruption. The CPU fetches a new PSW from a second assigned storage location. This new PSW determines the next program to be executed. When it has finished processing the interruption, the interrupting program may reload the old PSW, making it again the current PSW, so that the interrupted program can continue.

There are six classes of interruption: external, I/O, machine check, program, restart, and supervisor call. Each class has a distinct pair of old-PSW and new-PSW locations permanently assigned in real storage. The current program-status word in the CPU contains information required for the execution of the currently active program. The PSW is 64 bits in length and includes the instruction address, condition code and other control fields. In general, the PSW is used to control instruction sequencing and to hold and indicate much of the status of the CPU in relation to the program currently being executed. Additional control and status information is contained in control registers and permanently assigned storage locations.

The status of the CPU can be changed by loading a new PSW or part of a PSW. Control is switched during an interruption of the CPU by storing the current PSW, so as to preserve the status of the CPU, and then loading a new PSW.

Execution of LOAD PSW, or the successful conclusion of the initial-program-loading sequence or an interruption, introduces a new PSW. The instruction address is updated by sequential instruction execution and replaced by successful branches. Other instructions are provided which operate on a portion of the PSW.

A new or modified PSW becomes active (that is, the information introduced into the current PSW assumes control over the CPU) when the interruption or the execution of an instruction that changes the PSW is completed.

The interruption for PER associated with an instruction that changes the PSW occurs under control of the PER mask that is effective at the beginning of the operation. Bits 0 - 7 of the PSW are collectively referred to as the system mark.

**Storage Key**

A storage key is associated with each 4K-byte block of storage that is available in the configuration. The storage key has the following format.

```
                    ACC           F     R     C
 |_____|_____|_____|_____|_____|_____|_____|
 0                       4                 6
```

The bit positions in the storage key are allocated as follows:

**Access-Control Bits (ACC):**

If a reference is subject to key-controlled protection, the four access-control bits, bits 0-3, are matched with the four-bit access key when information is stored, or when information is fetched from a location that is protected against fetching.

**Fetch-Protection Bit (F):**

If a reference is subject to key-controlled protection, the fetched protection bit, bit 4, controls whether key-controlled protection applies to fetch-type references are monitored and that fetching with any access key is permitted; a one indicates that key-controlled protection applied to both fetching and storing. No distinction is made between the fetching of instructions and of operands.

2

**Reference Bit (R):**

The reference bit, bit 5 normally is set to one each time a location in the corresponding storage block is referred to either for storing or for fetching of information.

**Change bit (C):**

The change bit, bit 6, is set to one each time information is stored at a location in the corresponding storage block.

## Protection

Protection facilities are provided to protect the contents of main storage from destruction or misuse by programs that contain errors or are unauthorized. Key-controlled protection, access-list-controlled protection, page protection, and low-address protection are forms of protection available in ESA/390.

### Key-Controlled Protection

When key-controlled protection applies to a storage access, a store is permitted only when the storage key matches the access key associated with the request for storage access; a fetch is permitted when the keys match or when the fetch-protection bit of the storage key is zero.

The keys are said to match when the four access-control bits of the storage key are equal to the access key, or when the access key is zero.

When the access to storage is initiated by the CPU and key-controlled protection applies, the PSW key is the access key, except that the access key is specified in a general register for the first operand of MOVE TO SECONDARY and MOVE WITH DESTINATION KEY and for the second operand of MOVE TO PRIMARY, MOVE WITH KEY, and MOVE WITH SOURCE KEY. The PSW key occupies bit positions 8-11 of the current PSW.

When a CPU access is prohibited because of key-controlled protection, the unit of operation is suppressed or the instruction is terminated, and a program interruption for a protection exception takes place. When a channel-program access is prohibited, the start function is ended, and the protection -check condition is indicated in the associated interruption-response block (IRB). When a measurement-block access is prohibited, the I/O measurement-block protection-check condition is indicated.

When a store access is prohibited because of key-controlled protection, the contents of the protected location remain unchanged. When a fetch access is prohibited, the protected information is not loaded into a register, moved to another storage location, or provided to an I/O device. For a prohibited instruction fetch, the instruction is suppressed, and an arbitrary instruction-length code is indicated.

### Fetch-Protection-Override Control

Bit 6 of control register 0 is the fetch-protection-override control. When the bit is one, fetch protection is ignored for locations at effective addresses 0-2047. An effective address is the address which exists before any transformation by dynamic address translation or prefixing. However, fetch protection is not ignored if the effective address is subject to dynamic address translation and the private-space control, bit 23, is one in the segment-table designation used in the translation.

Fetch protection override has no effect on accesses which are not subject to key-controlled protected.

### Access-List-Controlled Protection

In the access-register mode, bit 6 of the access-list entry, the fetch-only bit, controls which types of operand references are permitted to the address space specified by the access-list entry. When the entry is used in the access-register-translation part of a reference and bit 6 is zero, both fetch-type and store-type references are permitted, and an attempt to store causes a protection exception to be recognized and the execution of the instruction to be suppressed.

### Page Protection

The page-protection facility controls access to virtual storage by using the page-protection bit in each page-table entry. It provides protection against improper storing.

The page-protection bit, bit 22 of the page-table entry, controls whether storing is allowed into the corresponding 4K-byte page. When the bit is zero, both fetching and storing are permitted; when the bit is one, only fetching is permitted. When an attempt is made to store into a protected page, a program interruption for protection takes place. The contents of the protected location remain unchanged.

One of the instructions that is able to modify part of a PSW is the Set PSW Key From Address (SPKA) instruction. The ESA/390 architecture requires the SPKA instruction to load the architecturally defined PSW "access key" from four bits extracted from the effective address of the SPKA instruction. The access key is used to limit the access of future instructions to certain storage areas to aid in providing protection and privacy of information.

The SPKA instruction has the following format.

TABLE A

| SPKA | $D^2(B^2)$ | | [S] |
| | 'B20A' | $B^2$ | $D^2$ |

```
  |_____|_____|_____|
  0                                16      20                   31
```

By execution of the SPKA instruction, the four-bit PSW key, bits 8-11 of the current PSW, is replaced by bits 24-27 of the second-operand address. The second-operand address is not used to address data; instead, bits 24-27 of the address form the new PSW key. Bits 0-23 and 28-31 of the second-operand address are ignored.

In the problem state, the execution of the SPKA instruction is subject to control by the PSW-key mask in control register 3. When the bit in the PSW-key mask corresponding to the PSW-key value is set is one, the SPKA instruction is executed successfully. When the selected bit in the PSW-key mask is zero, a privileged-operation exception is recognized. In the supervisor state, any value for the PSW key is valid. During execution of the SPKA instruction, the Condition Code remains unchanged.

The format of the SPKA instruction permits the program to set the PSW key either from the general register designated by the $B^2$ field or from the $D^2$ field in the instruction itself.

When one program requests another program to access a location designated by the requesting program, the SPKA instruction can be used by the called program to verify that the requesting program is authorized to make this access, provided the storage location of the called program is not protected against fetching. The called program can perform the verification by replacing the PSW key with the requesting-program PSW key before making the access and subsequently restoring the called-program PSW key to its original value. Caution must be exercised, however, in handling any resulting protection exceptions since such exceptions may cause the operation to be terminated.

One well-known computer operating with the IBM ESA/390 architecture is the Amdahl 5995-A computer. In that computer, the I-Unit pipeline is a six stage pipeline consisting of stages D, A, T, B, X, and W that process instructions.

One of the functions of the D stage is to collate the necessary information to reference storage in the A, T, and B stages. This D-stage function includes the generation of the effective address and selection of the access key to be used by the reference. The A, T, and B stages fetch operands/data using the current valid key that is defined by the architecture, PSW $KEY_A$.

One of the functions of the W (write) stage is to write results of operations to architecturally defined registers or storage. The W stage in the pipeline comes after the fetch-operands/data stages (A, T, and B) and the arithmetic functions stage (X). The access key used is the key, PSW $KEY_A$, from the architecturally defined PSW register. After the access key in the PSW has been updated in the W stage, the new key, $PSW_N$, is available for future operations/instructions and the new key becomes the architecturally defined key, PSW $KEY_A$. The ESA/390 architecture requires that the new key be effective starting from the instruction immediately following the SPKA instruction. The new PSW key can be used in a subsequent D segment while being updated in the W segment.

The fetching of any instruction following a SPKA instruction is subject to key fetch protections and hence must wait until the SPKA instruction has updated the key in the PSW register.

If a storage-reference instruction (an instruction that references storage) immediately follows a SPKA instruction, the fetching of data by that storage-reference instruction must wait until after the SPKA instruction has updated the access key in the PSW register, that is, must wait until the architecturally defined key, PSW KEY$_A$, has been updated with the new value, PSW$_N$, from the SPKA instruction.

A typical Amdahl computer operating in accordance with the above description and following the IBM ESA/390 architecture is represented as follows in TABLE B:

```
                        TABLE  B


     I₁    SPKA (key update)      D A T B X W              (flow 1)
     I₂    start storage reference  D A T B              Invalid
     I₃         .                   D A T                Invalid
     I₄         .                     D A                Invalid
     I₅         .                      D                 Invalid
     R     re-I-Fetch I₂
     I₂    execute storage reference    D A T B X W        (flow 2)



              ----- time ----->
```

The ESA/390 architecture requires that instruction and operand accesses for all instructions subsequent to the SPKA instruction are the architecturally defined PSW key, PSW KEY$_A$, value set by the SPKA instruction. Therefore, referring to TABLE B, flow 1 updates the access key in the W stage of the I$_1$ instruction and the new value of the key, PSW$_N$, is available for use one cycle after it has been updated in the W segment of I$_1$. Since the next instruction, I$_2$, comes from storage, it can only be fetched using the new access key that only becomes available after the W segment of instruction I$_1$. The I$_2$ instruction cannot commence its D segment until after it is refetched which starts no sooner than the W stage of I$_1$. Therefore, I$_2$ is significantly delayed.

Implementations of the ESA/390 architecture, such as the Amdahl 5995-A computer, that feature extensive pipelining and instruction queueing have the problem of possible invalid instructions plus re-fetched delays in the pipeline after a key-changing SPKA instruction.

In prior art Amdahl computers, if instruction I$_1$ was a SPKA instruction, the SPKA algorithm updated the architectural copy of the PSW, PSW$_A$ (at the W stage of I$_1$), invalidated any subsequent instructions in the instruction queue (I$_2$, I$_3$, I$_4$, I$_5$) and re-I-fetched the subsequent instructions using the new key value. These operations have a detrimental effect on performance in that processing time for subsequent instructions (I$_2$, I$_3$, I$_4$, I$_5$) already in the queue is wasted and additional time is wasted for re-i-fetching instruction I$_2$. The wasted time can be significant particularly in environments in which the SPKA instruction is executed frequently.

In accordance with the above background, there is a need for an improved computer system which operates more efficiently and does not waste as much time as a result of executing changes in keys.

## SUMMARY OF THE INVENTION

The present invention is a computer system which completes the Set PSW Key from Address (SPKA) instruction, I$_1$, in two I-Unit pipeline flows in those cases where the new key value should not cause a protection exception to be generated by the instruction stream I$_2$ I$_3$, I$_4$, . . . and so on. In those cases where SPKA should cause such an exception, the appropriate action is taken to obtain the correct results. By processing SPKA instructions in two I-Unit pipeline flows, significant performance improvement is realized.

After a SPKA instruction, subsequent instructions are processed without delay even though they are required to access the new key value, PSW KEY$_N$, provided by the SPKA instruction. For operand accesses before that new key value, PSW KEY$_N$, is accepted as the architecturally defined key, PSW KEY$_A$, a working copy of the SPKA new key value is used for operand accesses until the architectural defined PSW key, PSW KEY$_A$, is updated.

After a SPKA instruction, subsequent instructions in the instruction queue that have been prefetched with the "old" PSW key value, PSW KEY$_A$, are checked for potential fetch protection exceptions. For subsequent instructions, if fetch protection is enabled on any of the pages where instructions subsequent to SPKA exist and these instructions are executed, a pseudo-interruption is generated to invalidate the instruction queue and repeat the I-fetch of the instructions in question.

To implement the operations, a projected key register, KBDR, is provided to store the new PSW key, PSW KEY$_N$, from the SPKA instruction as a projected PSW key. The projected PSW key is used for instruction fetches and operand accesses until the architectural copy of the SPKA key is loaded.

Fetch protection logic is provided in the instruction fetch unit that determines if fetch protection is enabled for any instruction in the stream that has been, or currently is, being fetched into the instruction queue.

Interruption control logic is provided that, given an indication that fetch protection is enabled for data in the instruction queue that has started to execute, causes a pseudo-interruption that causes the I-fetch of potentially invalid instructions subsequent to SPKA to be repeated.

Pipeline controls are provided for exception checking and E-unit command valid generation that overrides the normal operation of two byte op codes.

The foregoing and other objects, features and advantages of the invention will be apparent from the following detailed description in conjunction with the drawings.

## BRIEF DESCRIPTION OF THE DRAWINGS

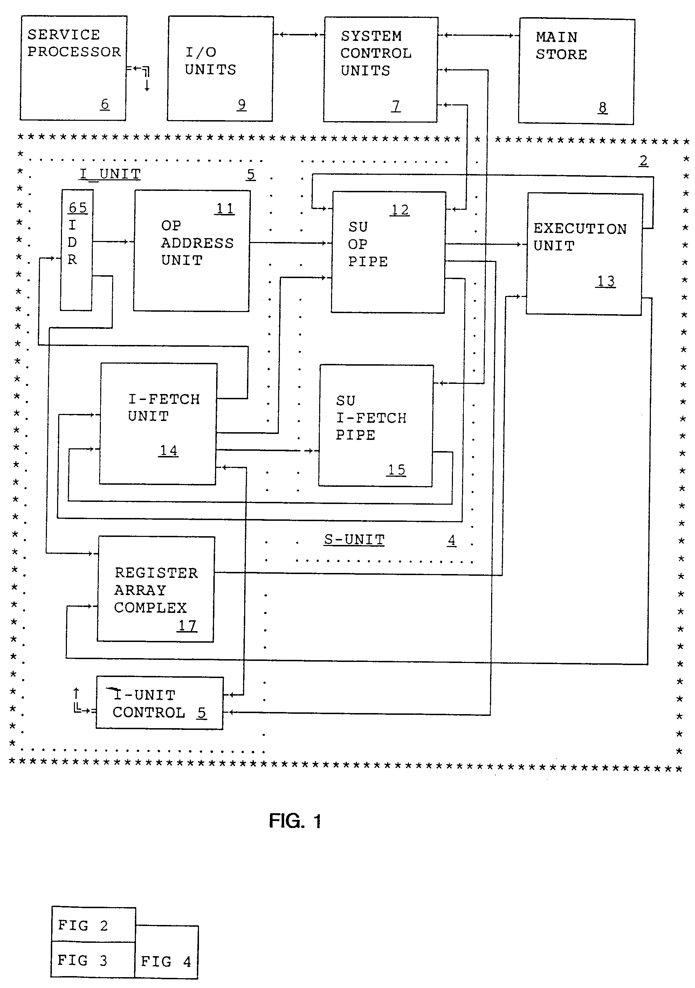

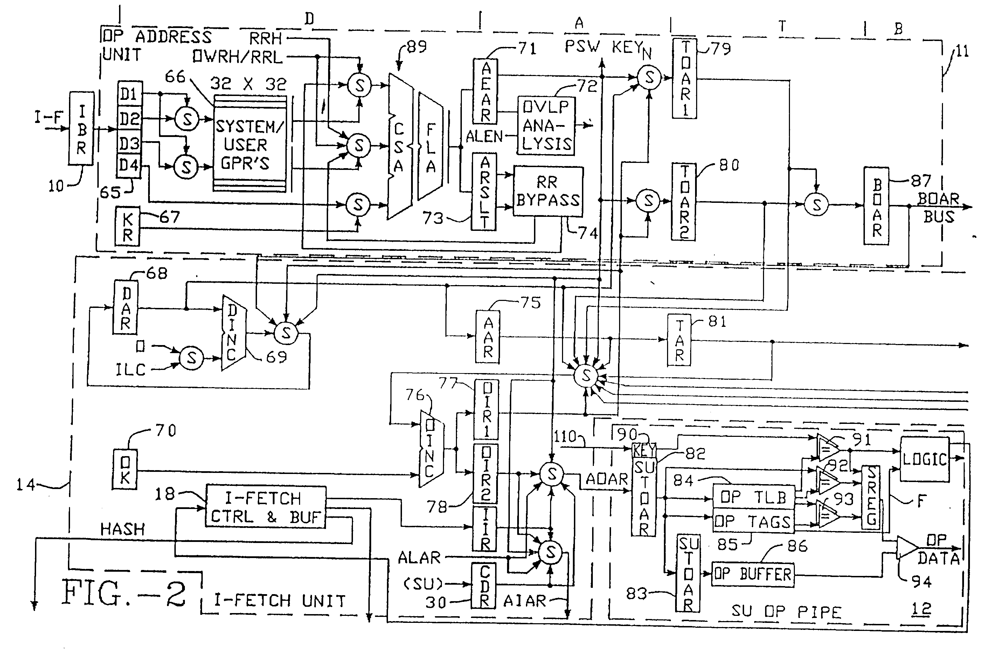

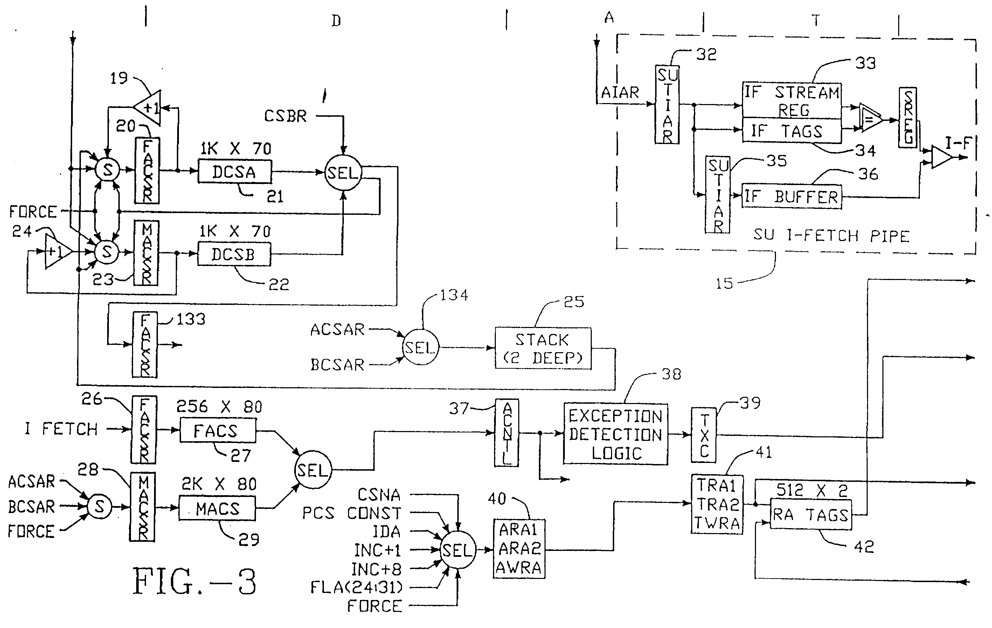

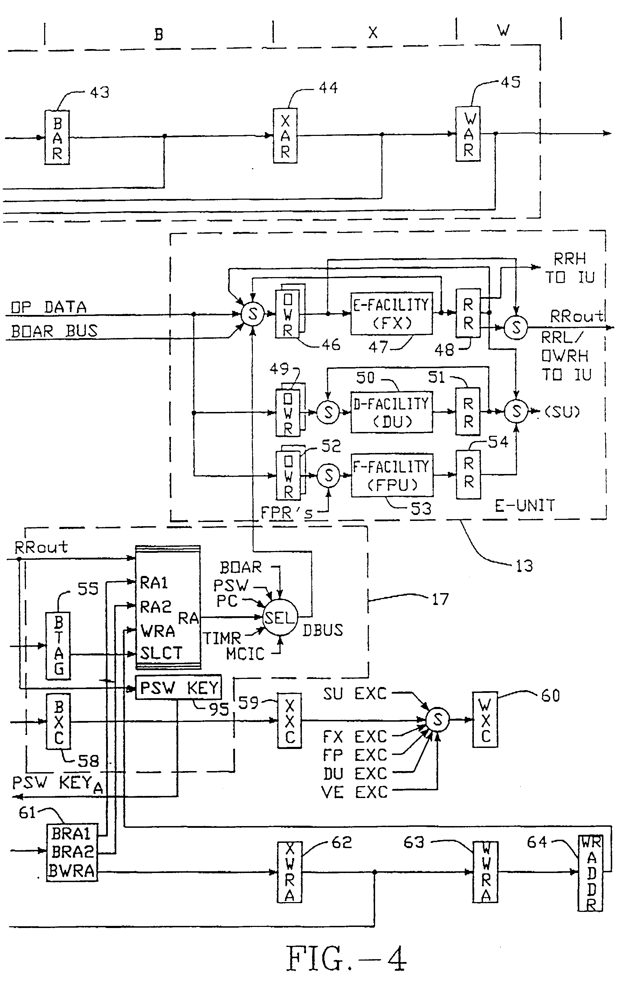

FIG. 1 depicts an overall block diagram of a computer system incorporating the present invention.

FIG's. 2, 3 and 4 depict detailed block diagrams of the FIG 1 system.

FIG. 5 depicts circuitry for the projected PSW key.

FIG. 6 depicts the instruction stream fetch protection circuitry for identifying the protection status of pre-fetched instructions.

## DECRIPTION OF THE PREFERRED EMBODIMENTS

### Overall Computer System - FIG. 1

In FIG. 1, a computer system compatible with the Amdahl 5995-A computer and which operates in accordance with the ESA/390 architecture is shown. The computer system of FIG. 1 includes an instruction unit (I-unit) 5, a storage unit (S-Unit) 4, an execution unit (E-Unit) 13, system control units 7, I/O units 9, main store 8, and a service processor 6. The instruction unit 5 includes an operand address unit 11, an instruction data register 65, an I-fetch unit 14, a register array 17, and an I-unit control 3. The storage unit 4 includes an SU Op Pipe 12 and an SU I-Fetch Pipe 15.

### Detailed System - FIG's. 2, 3, 4

In FIG's. 2, 3 and 4, further details of the computer system of FIG. 1 are shown with an orientation as depicted in the lower right-hand corner of FIG. 1. The computer system operates in a pipelining fashion where operation is divided into a number of segments including P, A, T, B, R segments and D, A, T, B, X, and W segments. The units of FIG's. 2, 3, and 4 operate generally over the D, A, T, B, X, and W segments after a current instruction is loaded into the IDR register 65. To load an instruction, the P segment performs priority resolution, the A segment performs instruction address presentation, the T segment performs TLB lookup and cache tag matching, and the B segment loads the current instruction into the IDR register 65.

In FIG. 2, the I-Unit 5 fetches instructions into the instruction data register (IDR) 65 which are to be processed in a pipeline fashion. Up to six instructions, for example instruction $I_1$, $I_2$, $I_3$, $I_4$, $I_5$, and $I_6$ can be processing in the FIG's. 2, 3, and 4 units in the D, A, T, B, X, and W segments.

In FIG. 2, the I-fetch unit 14 fetches instructions and stores them into the IDR 65 and delivers them to the storage unit Op Pipe 12 and the storage unit I-fetch pipe 15 to maintain a flow of instructions to be executed. The units of FIG. 2 cooperate with the register array 17 for controlling the flow of instructions and operands in the pipeline execution of the computer system.

The I-fetch unit 14 pre-fetches each instruction into the instruction data register IDR 65 so that when the D segment commences, the I-fetch unit 14 has finished for the current instruction, for example instruction $I_1$, and is pre-fetching subsequent instructions for example instructions $I_2$, $I_3$, $I_4$, $I_5$, $I_6$ and $I_7$. The I-fetch unit 14 during prefetching interacts with the storage unit 4 during the P, A, T, B, R segments that all precede the D, A, T, B, X, and W segments.

In FIG. 2, the IDR 65 provides information to the operand address unit 11. The operand address unit 11 determines addresses information to be processed by instructions. The addresses of operands are passed to the storage unit of operand pipe 12 which fetches the operands which are to be operated upon and delivers them to the execution unit 13. The execution unit 13 performs arithmetic and logical functions on the operands such as add, multiply, divide, move, or, and shift.

After prefetching, the D segment is the decode cycle for instruction decoding of the instruction in IDR register 65. The A segment is address presentation for the S-unit 4. The T segment is a translation TLB lookup and cache tag match cycle. The TLB is a translation look-aside buffer. The B segment is the buffer cycle when, if a correct translation occurred in the TLB and if the line of data addressed is in the cache, the data is accessed and latched into the operand word register OWR (46, 49, 52). The X segment is for execution in the E-Unit 13 which takes data from the OWR, executes on the data and places the result in the result register (48, 51, 54). The W segment is for writing the results to the location specified by the instruction, for example, to an internal register in register array 17 or back to main storage 8.

Referring to FIG.'s 2, 3, and 4 the instruction buffer register 65 is loaded by the I-fetch unit 14. The instruction buffer register 10 in turn loads the IDR register 65 in four fields, D1, D2, D3 and D4. The contents of the register 65 are selected to read the system or user general purpose registers 66 (GPR's). The contents of the general purpose registers are selected into the three-input adder 89.

After the SPKA instruction is latched into the IDR 65, the data address in the DAR register 68, valid in the D segment, is staged through the address registers in the A, T, B, X and W segments using the registers DAR 68, AAR 75, TAR 81, BAR 43, XAR 44, and WAR 45, respectively. In one alternate embodiment, the registers AAR 75, TAR 81, BAR 43 are eliminated and the equivalent information is obtained from other registers. Conceptually, however, these registers still exist even in the alterenate embodiment.

Following the ESA/390 architecture, an operand storage address consists of three components, a base, an index and a displacement. The base, index and displacement values from GPR's 66 are added in adder 89 to form the effective address which is latched into the ARSLT and/or AEAR registers 73 and 71.

The adder 89 forms the effective address and it is placed into the AEAR effective address register 71 and into the ARSLT result register 73. The contents of the effective address register 71 are present in the A segment and are used, among other things, as part of the access to the storage unit Op pipe 12 to obtain an operand from the storage unit. The contents are also stored into the T operand address registers 1 and 2, TOAR1 79 and TOAR2 80 in the T segment. The contents of one of the registers 79 or 80 are passed to the B segment operand address registers, BOAR 87. The storage unit Op pipe 12 includes a register 90 which is loaded with the PSW Key which is to be used for key protection checking when the storage unit is accessed. The key from the register 90 is compared in comparator 91 with a key from the OP TLB unit 84 to determine if a key match exits. The other portions of the TLB including the OP tags 85 and OP buffer 86 are also compared in comparator 92 to generate a TLB MATCH signal. If the key match from comparator 91 is not asserted, meaning that the key from register 91 does not match the key from the TLB unit, then the TLB match signal is not asserted meaning that a protection key violation has occurred. If the keys do match and all the other required matches are also present, the TLB match signal is asserted indicating that, among other things, no key protection violation has occurred.

If the instruction being processed is a SPKA instruction, for example, then the processing during the X segment will cause a new PSW including a new PSW $Key_N$ to be stored through the RR result registers 48, 51 and 54 to the register array complex 17. The PSW will be loaded directly into the register array 56 and also will be stored into the PSW Key shadow register 95. The PSW register 95 holds a duplicate copy of PSW Key stored in the register array 56.

Once the D-cycle of a SPKA instruction is complete, the effective address latched in the AEAR register 71 will be moved down the pipeline to provide a new $PSW_N$ in the W segment provided nothing prevents the new $PSW_N$ from being written.

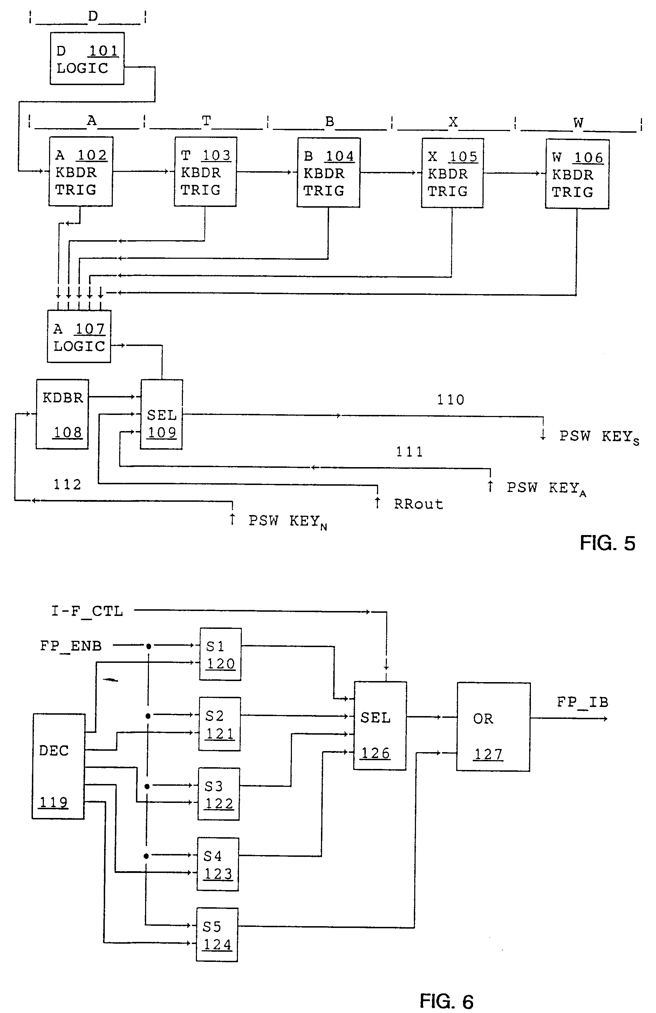

Projected Key Circuitry - FIG. 5

In FIG. 5, further details of the I unit logic specifically added for use with the SPKA instruction is shown. In the D segment, the D LOGIC 101 operates to set the A KBDR TRIG 102 to be valid in the A segment. When the A KBDR trigger 102 is set in the A segment the set value is passed down the pipeline to the T KBDR Trigger 103 in the T segment, to the B KBDR Trigger 104 in the B segment to the X KBDR Trigger 105 in the X segment and to the W KBDR Trigger 106 in the W segment.

The A LOGIC 107 receives an input from the triggers 102 through 106 for use by the selector 109. The selector 109 is operable to select either the new PSW $Key_N$ from the KDBR register 108, the PSW Key from the from the PSW Key register 95 of FIG. 4, or the early value of the 6 PSW $Key_A$ from the result 9 register output RRout. The PSW $Key_N$ in the KDBR register 108 is the projected key while the PSW $Key_A$ from the register 95 is currently active key. The particular one of the keys selected, is determined by selector 109 and is output as PSW $KEY_S$ on the PSW Key line 110. The line 110 connects as the key input to the key register 90 in the SU OP pipe 12 of FIG. 2.

In a first A segment (long prior to the W segment), the new key, $PSW_N$, is obtained from the AEAR register 71 and stored into the key data buffer register (KBDR) 108 to be valid during the next A segment. The $PSW_N$ contents of the KBDR REGISTER 108 are used as a projected key and that projected key will be the architectural key PSW $KEY_A$, if the SPKA instruction completes and stores the new PSW into the architectural PSW in the W segment. The SPKA instruction processing can also uses KBDR override conditions using the trigger latches 102 through 106 that signal instructions following the SPKA instruction to use the key PSW KEY$_N$ from the KBDR register instead of the key PSW KEY$_A$, that comes from the currently active PSW. Note that the KBDR may select the result register RRout to be used.

The currently active PSW$_A$ is located at an address in the register array 17, but certain bits of the PSW are also distributed to locations to be used for control functions. For example, the selected key, PSW KEY$_S$, presented to the S-unit 4 is stored in register 90 of the SU Op Pipe 12 for use in the addressing operation. A condition code part of the PSW indicates the conditions which result during the execution phase and update the PSW at the X to W transition. The PSW is considered valid in the W segment.

During the pipeline processing of instructions after a SPKA instruction, a choice is made not to use the current key, PSW KEY$_A$, which is in the register array 17 and distributed throughout the I-Unit 5, but use the new key, PSW KEY$_N$, which is stored in the KBDR register 108 until the PSW KEY$_A$ in update with the PSW KEY$_N$ in the W segment.

The I-fetch Unit 14, with activity that precedes the D segment, pre- fetches instructions that have a reasonable possibility of being executed. If the need for pre-fetched instructions to be executed arises, the I-fetch Unit 14 attempts to have them ready to execute.

The pre-fetched instructions are stored in internal registers, called instruction buffer registers (IB registers) and fetch data registers (FDR).

The instruction buffer and fetch data registers 10 can load the IDR 65. These registers precede the IDR 65 and are associated with the I-fetch unit 14 which is loaded by the I-fetch instruction cache from the storage unit 4.

The IB registers and the FDR registers buffer pre-fetched instructions that may or may not be executed. The FDR's are used for holding instructions that belong to a predicted branch stream. Pre-fetched instructions may be accessed from storage that is subject to key-control protection checking. Since a SPKA instruction changes the protection key, the key authority used to pre-fetch instructions may have changed. If after pre-fetching instructions a SPKA instruction is executed that invalidates the key authority of the pre-fetched instructions, the subsequent use of the pre-fetched instructions may not be authorized.

A process that stores into the instruction stream requires special handling (STIS). Because the computer system of FIG. 1 has an I-fetch cache and an operand cache and instructions are pre-fetched, self-modifying code may alter some subsequent instructions to be executed that have already been prefetched in unaltered form. When a STIS condition is detected, the instruction that caused that STIS condition, when it gets to the end of the pipe, causes an obstruction of the following instructions since the following instructions may be erroneous. The instructions following a STIS, condition are re-I-fetched. Any instruction pre-fetching that has been done is re-I-fetched and any instructions in the FDR's or IB's are cleared out. Every instruction that may have been corrupted is re-I-fetched.

If there is any doubt as to whether a pre-fetched instruction can be used, a STIS condition causes the instruction to be re-fetched to verify that the instruction is allowed.

This STIS mechanism is the same as used to cause the re-I-fetch of instrucitons, subsequent to a SPKA instruction, which were prefetched using the old PSW$_A$ and which now may have key-protections the exceptions if fetched using the new PSW$_N$ key set by the SPKA instruction.

Instruction Prefetching Mechanism - FIG. 6

The I-fetch unit 14 fetches instructions from multiple streams and buffers the instructions until needed, if needed. For example, I-fetch unit 14 will prefetch a serial stream, Stream 1, in the following TABLE C and hold it until it is needed. I-fetch unit 14 will also prefetch instructions from a branch stream, Stream 2, at the target address of a branch instruction, I$_4$, so that if the branch is taken the target stream has already been fetched. Stream 1 and Stream 2 are indicated in the following TABLE C.

TABLE C

| Stream 1 | Stream 2 |
|---|---|
| $I_1$ | |
| $I_2$ | |
| $I_3$ | |
| $I_4$ Branch [$I_{51}$] | $I_{51}$ |
| $I_5$ | $I_{52}$ |
| $I_6$ | $I_{53}$ |
| $I_7$ | $I_{54}$ |
| $I_8$ | $I_{55}$ |
| $I_9$ | $I_{56}$ |
| $I_{10}$ | $I_{57}$ |
| $I_{11}$ | $I_{58}$ |
| $I_{12}$ | $I_{59}$ |
| $I_{13}$ | |
| $I_{14}$ | |

If the branch is not taken, the current instruction stream execution in TABLE C is $I_1$, $I_2$, $I_3$, $I_4$, $I_5$, $I_6$, $I_7$, $I_8$, $I_9$, $I_{10}$, $I_{11}$, $I_{12}$, $I_{13}$, $I_{14}$.

If the branch is taken at $I_4$, the current instruction stream execution in TABLE C is $I_1$, $I_2$, $I_3$, $I_4$, $I_{51}$, $I_{52}$, $I_{53}$, $I_{54}$, $I_{55}$, $I_{56}$, $I_{57}$, $I_{58}$, $I_{59}$.

The fetching from multiple streams indicated in TABLE, C is facilitated with the use of stream registers in FIG. 6. The stream registers 120, 121, 122 and 123 each represent instructions being fetched from various streams. For example, the current stream Stream 1 in TABLE C (serial execution of instructions) is assigned the S1 stream register 120 and each branch target stream is assigned a different stream register. For example, Stream 2 in TABLE C is assigned the S2 Stream register 121. When I-fetch fetches data, it does so for a particular stream. Only one stream is selected to be the current stream. The other streams represent prefetched data for branches that may or may not be taken. If a branch is taken, the stream representing the data for the target of that branch is selected to be the current stream and what used to be the current stream is no longer the current stream. When instruction data is returned from the S-Unit, a flag is returned indicating whether or not that data came from a page that was subject to instruction key fetch protection. That flag is latched into a register. Since the instruction data pertains to 1 of 4 streams and the flag is specific to the data, each stream register latches up its own copy of the flag. When a stream is selected to be the current instruction stream, its flag is selected and, if asserted, will indicate that the instruction data that is also being selected came from an area of storage that is subject to instruction fetch protection. This in turn will cause a STIS condition to be forced. An additional register for each stream (registers $S_1$, $S_2$, $S_3$ and $S_4$ in FIG. 6) is required to latch the fetch protection flag from the S-Unit to cover the case that the prefetched data for the current stream comes from two different pages part from the end of one page and part from the beginning of the next page. In such an event, the fetching protection status for each of those pages is latched. The fifth flag register ($S_5$ in FIG. 6) holds the fetch protection status of the prior page if current-stream prefetching crossed a page or the current page if current-stream prefetching did not cross a page. (If current-stream prefetching does not cross a page, the $S_5$ register holds the same data as the current-stream flag register). Since the $S_5$ flag register pertains to the current stream, it is always selected and is logically OR'ed in OR gate 127 with the other flags from registers $S_1$, $S_2$, $S_3$, and $S_4$ for the currently selected stream. None of the non-current streams require the use of the $S_5$, register because, if prefetching crosses a page, I-fetch assigns an additional stream register (one of the unused registers $S_1$, $S_2$, $S_3$, and $S_4$) to that stream.

Instruction Prefetch Purging Mechanism. When instructions that are fetched for execution reside in storage

9

locations that are subject to access-key controlled fetch protection and the computer system attempts to pre-fetch instructions, three problem cases are as follows:

1) Instructions following the SPKA instruction are fetched from storage locations having a fetch protection analysis being altered by the SPKA instruction currently in the process of execution. Thus, the prefetched instructions are not valid for execution unless the new key protection requirements are met. The ESA/390 architecture requires that the SPKA instruction be immediately effective on the next instruction including the actual fetch of the instruction and the fetching of its operands.

2) Instructions following the SPKA instruction are fetched from storage locations having a fetch protection analysis being altered by the SPKA instruction currently in the process of execution and at least one of those prefetched instructions is also in the process of being executed. (Pipelined computers can have multiple instructions in various stages of execution simultaneously.)

3) Instructions following the SPKA instruction are fetched from storage locations having a fetch protection analysis being altered by the SPKA instruction when and if it is executed. For example, the SPKA instruction is prefetched and thus may or may not be executed.

These problems can be circumvented by discarding all instructions following the SPKA instruction after the SPKA instruction completes and before any subsequent instruction completes execution. Thus, all the instructions must be refetched using the new PSW access key. However, such refetching causes a severe performance disadvantage for the following reasons:

1) There is a very high chance that the subsequent instructions, fetched after the SPKA changes the PSW access key, reside in the same storage page as the SPKA instruction. Since it is unusual and rare that SPKA would invalidate its sequential instruction stream, the prefetched instructions have a very high probability of being valid.

2) In many operating system environments, instruction fetch protection is typically not enabled.

Thus, prefetched instructions following a SPKA instruction will generally not fall into one of the above problem cases.

The computer system of the present invention includes circuitry to avoid unnecessarily discarding prefetched instructions.

Case 1 is dealt with by using the KBDR projected key of FIG. 5. The prefetching of instructions will use the access key specified by the KBDR selector of FIG. 5.

Cases 2 and 3 are handled by the addition of the stream flag circuitry of FIG. 6 which keeps track of whether or not prefetched instructions reside in pages that have instruction fetch protection enabled. If a prefetched instruction is subject to instruction fetch protection analysis and it has not been fetched using the KBDR override mechanism, the SPKA instruction will force a re-I-fetch in the manner normally performed without the present invention.

The computer system of FIG. 1 allows the Set PSW Key from Address (SPKA) instruction to complete in two I unit pipeline flows in those cases where the new key value does not need to cause a protection exception to be generated. In the unlikely event that SPKA needs to cause an exception, the appropriate results are generated by re-I-fetching whereby no time saving results. By processing SPKA instructions in this manner, a significant performance improvement is realized since re-I-fetching in often avoided.

The following TABLE 1 represents the control algorithm for high performance processing for PSW key-setting SPKA instructions.

## TABLE 1

```
/* ALG NAME:   B2COMMON                                              */
/*                                                                  */
/* MNEMONIC:  VARIOUS              TYPE:      RRE, S, SSE            */
/* OPCODES:     'B2--'X            ASSEMBLY:  VARIOUS                */
/*                                                                  */
/*                                                                  */
/* DESCRIPTION:                                                     */
/*                                                                  */
/*    THIS FLOW IS THE FIST FLOW FOR ALL B2 OPCODES.                */
/*                                                                  */
/*    THIS FLOW CONTAINS THE SPKA ALGORITHM                         */
/*                                                                  */
/* CONDITION CODE:                                                  */
/*                                                                  */
/*    UNCHANGED                                                     */
/*                                                                  */
/* PROGRAM EXCEPTIONS:                                              */
/*                                                                  */
/*    NONE                                                          */
/*                                                                  */
/* PIPELINE SEQUENCES:                                              */
/*                                                                  */
/*    B2COMMON     D A T B X W      B2XX COMMON FLOW #1             */
/*    6C8COMMON      D A T B X W    B2XX COMMON FLOW #2             */
/*                     D A T B X W  FIRST UNIQUE FLOW FOR B2 OPCODES */
/*                                                                  */
/* FLOW DIAGRAM:                                                    */
/*                                                                  */
/*    START -> B2COMMON -> 6C8COMMON -> 1ST UNIQUE FLOW FOR OPCODE  */




FLOW B2COMMON;  FACS;  ORIGIN 'B2'X;  DCD_OPCD '0B2'X;  FCNT '8'X;

     6C8COMMON -> NEXT_FLOW;

CYCLE D  - - - - - - - - - - - - - - - - - - - - - - - - - - - - - -

     '2'X -> DCD_OPCD<0:3>;            /* SET DCD_OPCD TO X'2--' FOR  */

F   0+B+D -> A_EAR, A_RSLT;           /* SPKA ALGORITHM FROM HEREON  */
H   1 -> INHIBIT_OP_PRI_REQ;
    1 -> CHECK_OPEX_RAM;
    1 -> CHECK_B2_OPS;
H   IF ((D12 = '10'X) + (D12 = '11'X))
```

TABLE 1

```
          1 -> ENABLE_DOMAIN_INLK;          /* D12 = '10'X is SPX  */
                                            /* D12 = '11'X is STPX */
     H   ~TPI_RUPT_PEND -> PC_COND<1>;      /* FOR TPI                    */


      /* IF (SPKA * USER * PROBLEM * 370 * EC_MODE * CR6<0:1>=10)        */
      /*   1 -> FORCE_ICI;               VMA EMULATION BY MACROCODE      */

     CYCLE A   - - - - - - - - - - - - - - - - - - - - - - - - - - - - -

     F   A_EAR -> T_OAR1, T_OAR2, SU_OAR;  /* NEW PSW KEY                */

     CYCLE T   - - - - - - - - - - - - - - - - - - - - - - - - - - - - -

         SLL_48 -> B_EU_OPCD;
     H   IF (SPKA)
             T_CMND_VAL -> XU;
         T_OAR1 -> B_OAR;

     CYCLE B   - - - - - - - - - - - - - - - - - - - - - - - - - - - - -

         B_OAR -> B_OAR_BUS;
         RA(B_RA2) -> XU_OWRH;             /* DON'T CARE                 */
         B_OAR_BUS -> XU_OWRL;             /* PSW KEY TO E-UNIT          */

     CYCLE X   - - - - - - - - - - - - - - - - - - - - - - - - - - - - -

                          /* XU_OWRL -> XU_RRH */

     CYCLE W   - - - - - - - - - - - - - - - - - - - - - - - - - - - - -

     H   XU_RRH<16:31> -> RUPT_WORK_REG<0:15>;

     /* DESCRIPTION:                                                     */
     /*                                                                  */
     /*   1.  THE DECODE OPCODE IS CHANGED SO THAT IT IS UNIQUE FOR EVERY */
     /*       B2 OPCODE.                                                 */
     /*   2.  ALL REQUIRED ITM TESTING FOR B2 OPCODES IS PERFORMED DURING */
     /*       D FIST.  OTHER INSTRUCTION INTERCEPTION TESTING REQUIRED BY */
     /*       VARIOUS B2 OPCODES IS PERFORMED ON FLOWS THAT ARE SPECIFIC */
     /*       TO THE RESPECTIVE ALGORITHM.                               */
     /*   3.  THE SPKA ALGORITHM TESTS FOR INTERCEPTION AND PRIV-OP      */
     /*       CONDITIONS.                                                */
     /*   4.  THE NEW PSW KEY IS PLACED INTO A_EAR AND T_OAR1 FOR USE ON */
     /*       THE NEXT FLOW.                                             */
     /*   6.  If the opcode indicates SPX or STPX, enable the domain     */
     /*       interlock as SPX00 and STPX00 need the updated AD_NUM.     */
     /*   7.  Load rupt work reg so next flow can check for a WSMSV event */
     /*       and cause a PCI on LPS for SPKA.                          */

     END B2COMMON;
```

## TABLE 1

```
{

FLOW 6C8COMMON;  DCSB;  ORIGIN '6C8'X;  DCD_OPCD '20A'X;  FCNT 'F'X;

    '1FB'X -> CONST;                    /* RA ADDRESS OF CURRENT KEY    */

CYCLE D   - - - - - - - - - - - - - - - - - - - - - - - - - - - - -

    1 -> TWO_BYTE_MAP_VALID;            /* FORCE DCSA FOR NEXT FLOW     */
    D12 -> D_DCD_OPCD<4:11>;            /* AND A TWO BYTE REMAP         */
H   IF (RRE_FORMAT)
      RRE_BUBBLE_UP -> IFETCH;

    CONST -> A_RA1, A_RA2, A_WA;
H   IF (SPKA)                           /* DECODE PERFORMED BY CSBR;    */
      1 -> A_WAT;                       /*   WRITE NEW PSW KEY          */
H   IF (SPKA)
      A_EAR<24:27> -> KBDR;
H   IF (SPKA)
      A_EAR<24:27> -> SOURCE_KEY;
H   IF (SPKA)
      1 -> KBDR_OVERRIDE;
H   IF (SPKA)
      1 -> D_LPS;
           /* IF (GUEST)                               */
           /*    1 -> A_RA1<2>, A_RA2<2>, A_WA<2>;     */
           /* Above token will come on for BAKR alg    */
           /* but shouldn't cause any problems.        */

CYCLE A   - - - - - - - - - - - - - - - - - - - - - - - - - - - - -

H   IF (SPKA * PROBLEM * (SOURCE_KEY~=CR3_KEY_MASK))
      PRIV_OP(2) -> T_XC;

CYCLE T   - - - - - - - - - - - - - - - - - - - - - - - - - - - - -

CYCLE B   - - - - - - - - - - - - - - - - - - - - - - - - - - - - -

    1 -> INHIBIT_XU_OWR;
H   IF (SPKA * FETCH_PROTECT_IN_BUFFER)
      FORCE_STIS -> IFETCH;            /* REIFETCH NSI FOR XCPN CHECK   */

CYCLE X   - - - - - - - - - - - - - - - - - - - - - - - - - - - - -
                                      /* OWRL<24:27> -> RRH<8:11>      */

CYCLE W   - - - - - - - - - - - - - - - - - - - - - - - - - - - - -
P   0 -> KBDR_OVERRIDE;
H   IF (SPKA)
      CHECK_WSMSV(RUPT_WORK_REG<8:11>);
```

## TABLE 1

```
/* DESCRIPTION:                                                    */
/*                                                                 */
/*   1.  NOTE THAT THE DCD_OPCD SPECIFIED APPLIES ONLY TO SPKA.  FOR   */
/*       B2 OPCODES, THE VALUE OF THE DCD_OPCD IS DEPENDENT ON THE D12 */
/*       FIELD OF THE INSTRUCTION.  THEREFORE, FOR OTHER B2 OPCODES,   */
/*       THE DCD_OPCD IS DIFFERENT.                                */
/*   2.  THE FOLLOWING DESCRIPTION APPLIES TO THE SPKA ALGORITHM.  */
/*   3.  FOR SPKA IN PROBLEM STATE, THE NEW PSW KEY IS CHECKED FOR */
/*       VALID AUTHORIZATION.  A PRIVILEGED OPERATION EXCEPTION IS */
/*       GENERATED IF THE PROBLEM STATE PROGRAM IS NOT AUTHORIZED  */
/*       TO CHANGE TO THE NEW KEY.                                 */
/*   4.  THE NEW PSW KEY IS MOVED INTO THE KBDR FROM A_EAR AND INTO */
/*       THE HARDWARE PSW KEY VIA RRH<8:11>.                       */
/*   5.  THE KBDR IS USED AS THE PSW KEY FOR A CYCLES SUBSEQUENT TO */
/*       THE NEXT BUT ONLY WHILE THE KBDR_OVERRIDE TRIGGER IS SET.  */
/*       THIS ALGORITHM REQUIRES THAT NO NSI WILL ATTEMPT TO ALTER THE */
/*       KBDR WITH SOMETHING OTHER THAN A NEW PSW KEY BEFORE THE KBDR */
/*       OVERRIDE TRIGGER IS RESET IN THE W CYCLE.  THIS IS A FAIR  */
/*       ASSUMPTION SINCE THE KEY INSTRUCTIONS (MVCK ETC) LOAD THE  */
/*       KBDR FROM THE RRH.                                         */
/*   6.  IF THE IFETCH BUFFER HAS ANY DATA IN IT THAT COMES FROM A  */
/*       PAGE WITH FETCH PROTECTION TURNED ON, A REIFETCH IS PERFORMED */
/*       TO ENSURE THAT NO INSTRUCTION IS EXECUTED WITHOUT FIRST BEING */
/*       TESTED FOR A FETCH PROTECTION EXCEPTION USING THE LATEST KEY. */
/*       THIS IS ACHIEVED BY TELLING THE IFETCH MACHINE THAT STIS HAS  */
/*       OCCURRED.                                                  */
/*   7.  IF SPKA, check if the new key should cause a PCI condition. */

END 6C8COMMON;/
//
//
//  Legend:
//      KBDR = KEY Buffer Data Register.
//      INH KEY CHK = Inhibit key check
//      FRC KBDR SEL = D-cycle hardware decode
//      KBDR OVERRIDE = Used by SPKA Algorithm  }
```

The SPKA instruction is executed by the control algorithm of TABLE 1 which is executed with first (B2COMMON) and second (6C8COMMON) flows. During the D-cycle of the first common flow, the effective address generator (EAG) adds in adder 89 the base plus displacement (B+D) to create the $KEY_N$ that is to be loaded into the PSW KEY at the end of the flow. This new KEY is used as the PSW $KEY_N$ (for the current mode) beginning with the instruction immediately following the SPKA instruction.

In order to prevent the next instruction from waiting for the PSW $KEY_A$ to be updated, the new PSW $KEY_N$ is loaded into the KBDR 108 from the AEAR register 71 during the D-cycle of the second common flow. For the succeeding D-cycles, selection of the KBDR key into the A_OP_KEY register 90 of SU OP pipe 12 is forced until the PSW $KEY_A$ is updated with the new value. This forcing will be controlled via the KBDR_OVERRIDE signal of TABLE 1 which controls selector 109 in FIG. 5.

The KBDR_OVERRIDE signal is generated by decoding the 1->KBDR_OVERRIDE token and staging it through the staging triggers 102 through 106 of FIG. 5 to the W-cycle. A logical OR of each stage is then performed in logic 107 of FIG 5. The W-cycle hardware token 0->KBDR_OVERRIDE is implemented by staging the KBDR_OVERRIDE signal only to the W-cycle of the second flow of SPKA. Each stage of this staging platform is validated when used to ensure that the KBDR_OVERRIDE signal is ignored if the SPKA instruction is canceled. The KBDR_OVERRIDE is generated in accordance with the following TABLE 3.

TABLE 3

```
+-----------------------------------------------------------------+
|                  DREL -e      AREL -e         XREL -e           |
|                  +w-V-+       +w-V-+          +w-V-+            |
|                  | |   |      | |   |         | |   |           |
| D SET KDBR OVRD -->| |   +++    | |   +++       | |   +++          |
|                  | |   | +--+-+|   | +--+-...-+|   | +---        |
|                  +x---+++  | +x---+++  |    +x---+++          |
|                           |          |                        |
|                           |          |      +---+            |
|                           |          +-----+   +------       |
|                           +------------------+ O |KBDR OVER- |
|                                          ...-+ R |      RIDE |
|                       W VALID KBDR OVRD -----+   |           |
|                                              +---+           |
|                                                              |
|#D SET KBDR OVRD = (D DCD: (IF SPKA) 1 -> KBDR OVERRIDE) &    |
|#                  (D IDR DCD EQ SPKA) & ~(D FLOW B ICI)      |
+-----------------------------------------------------------------+
```

The execution of the SPKA instruction is performed in two flows as indicated in TABLE 4.

TABLE 4

```
+-----------------------------------------------------------------+
|# Common1(SPKA)  | D | A | T | B | X | W |                      |
|# Common2(SPKA)      | D | A | T | B | X | W |                  |
|# NSI0                   | D | A | T | B | X | W |              |
|# NSI1                       | D | A | T | B | X | W |          |
|# NSI2                           | D | A | T | B | X |          |
|# NSI3                               | D | A | T | B |          |
|# NSI4                                   | D | A | T |          |
|#KEY -> EAR         #q---e                                      |
|#EAR -> KBDR        #    q---e                                  |
|#1-> KBDR OVERRIDE  #q---e                                      |
|#0-> KBDR OVERRIDE  #                        q---e             |
|#KBDR OVERRIDE      #    q-------------------e                 |
|#RRH -> PSW<KEY>    #                        q---e             |
|#New PSW KEY Valid  #                          q-----...       |
+-----------------------------------------------------------------+
```

The execution of multiple SPKA instructions is performed as indicated in TABLE 5.

TABLE 5

```
+-----------------------------------------------------------------------+
| # Common1(SPKA)    | D | A | T | B | X | W |                          |
| # Common2(SPKA)        | D | A | T | B | X | W |                      |
| # NSI0                     | D | A | T | B | X | W |                  |
| # Common1(SPKA)                | D | A | T | B | X | W |              |
| # Common2(SPKA)                    | D | A | T | B | X | W |          |
| # NSI1                                 | D | A | T | B | X | W |      |
| # NSI2                                     | D | A | T | B | X |      |
| #KEY -> EAR        #q---e          q---e                               |
| #EAR -> KBDR       #      q---e          q---e                         |
| #1-> KBDR OVERRIDE #q---e          q---e                               |
| #0-> KBDR OVERRIDE #                      q---e          q---e         |
| #KBDR OVERRIDE     #      q--------------------------------e           |
| #RRH -> PSW<KEY>   #                      q---e          q---e         |
| #New PSW KEY Valid #                                     q----...      |
+-----------------------------------------------------------------------+
```

The KBDR override of TABLE 3 functions as follows. The SPKA flow that updates the access key evaluates what the new access key value will be when it is in its D cycle even though the result is not written until the W cycle of that flow. Four bits are extracted from the effective address generated in the D stage to form a projected key. The projected key is not used to update the PSW at this time during the D segment because that function is reserved for the W segment because the SPKA instruction may not process as far as W stage segment. For example, a previous branch instruction or an interruption, may prematurely terminate processing of the SPKA instruction so that the W segment is never reached and the PSW key is properly not updated.

The Key Buffer Data Register (KBDR) is provided to hold the projected value of the access key assuming that the SPKA instruction will update the PSW key in the W stage. The KBDR is loaded in the D stage of the SPKA flow that updates the access key in the W stage. A KBDR override mechanism selects the key contained in the KBDR to be used for storage references instead of the key contained in the PSW (Case 7 below shows an exception). When case 7's are detected by the hardware the value currently being loaded into the PSW is used instead of the KBDR value. The KBDR override mechanism is effective from the A stage to the W stage of the SPKA instruction. Thus, storage referencing instructions following a SPKA are not delayed as the in prior Amdahl 5995-A system. Instructions execute as shown in the following TABLE 6:

TABLE 6

```
time epoch:             A B C D E F G H I J K L

SPKA key update:        D A T B X W                (flow 1)
storage reference #1:     D A T B X W              (flow 2)
storage reference #2:       D A T B X W            (flow 3)
storage reference #3:         D A T B X W          (flow 4)
storage reference #4:           D A T B X W        (flow 5)
storage reference #5:             D A T B X W      (flow 6)
storage reference #6:               D A T B X W    (flow 7)

                        ----- time ----->
```

During time epoch A, referred to as cycle A, the KBDR 108 of FIG. 5 is loaded with the projected key, PSW KEY$_N$ extracted from the effective address. A pipeline tag is set into triggers 102 through 106 of FIG. 5 to indicate that the KBRR has been loaded with a projected key. The tag progresses down the pipe from trigger 102 to trigger 106 with the SPKA flow, flow 1. Thus, when the SPKA instruction is in the A stage, the A KBDR OVERRIDE tag will be set in trigger 102; when SPKA is in the T stage, the A KBDR OVERRIDE tag trigger 102 reset and the T KBDR OVERRIDE tag in trigger 103 is set.

In time B, the SPKA instruction is in the A stage and the A KBDR OVERRIDE tag is set. Flow 2 is in the D stage and since it will reference storage it needs an access key. The access key, absent the present invention, is provided as PSW KEY$_A$ but that key is out of date for an instruction following a SPKA instruction since the SPKA instruction will not update the PSW KEY$_A$ until time F. The KBDR override of FIG. 5 forces the key to be selected by selector 109 from the KBDR 108 instead of the PSW KEY$_A$ if any of A KBDR OVERRIDE, T KBDR OVERRIDE ..., W KBDR OVERRIDE tags in FIG. 5 are set. Thus flow 2 will select the projected new key, PSW KEY$_N$ contained within the KBDR 108 for storage reference.

In times C, D and E, SPKA is in the T, B, and X stages, respectively, and the T, B, and X KBDR OVERRIDE tags are set, respectively. Since "any of A, T, B, X, or W KBDR OVERRIDE tags are set" is true, flows 3, 4 and 5 which reference storage will use the KBDR projected key instead of the PSW KEY$_A$.

In time F, for the same reasons above, flow 6 in its D stage will select the KBDR as the access key to be used. The SPKA instruction flow is now in the W cycle and the PSW access key, PSW KEY$_A$, is updated with the same value as the projected key PSW KEY$_N$.

In time G, the SPKA instruction has completed and the new PSW access key, PSW KEY$_N$ is available for use as PSW KEY$_A$. Flow 7 in its D stage will select the PSW key, PSW KEY$_A$, instead of the KBDR projected key since "any of A, T, B, X or W KBDR OVERRIDE tags are set" is now false.

In time H and beyond, the I-Unit operates in its normal manner without use of FIG. 5. Certain design considerations pertain to the KBDR override mechanism of FIG. 5. These will be considered in the following cases representative of pipeline flow sequences.

Case 1: A branch preceding SPKA branches around SPKA

```
BC        D A T B X W           branch to target detected in B stage
SPKA0       D A T -             first SPKA flow
SPKA1         D A -             load KBDR in D; load PSW key in W
NSI             D -             Next Sequential Inst. after SPKA
target            D A T B X W     branch target instruction
```

The SPKA instruction loaded the KBDR with the projected key in the D stage but never had an opportunity to load the PSW key, PSW KEY$_A$, with a new value. Although SPKA started to execute, its execution was terminated when a previous branch instruction determined that the branch should be taken. Although the instruction following SPKA would have used the KBDR as the source of the access key since the A KBDR OVERRIDE tag would have been set in its D stage, this instruction was also branched around. The target instruction of the branch must use the unmodified PSW access key, PSW KEY$_A$, since the SPKA never executed. Unless taken into account, the T KBDR OVERRIDE tag is asserted in the target instruction D stage and the wrong access key is used.

Case 2: A late branch decision preceding SPKA branches around SPKA

```
BC        D A T B X W           branch to target detected in X stage
SPKA0       D A T B -           first SPKA flow
SPKA1         D A T -           load KBDR in D; load PSW key in W
NSI             D A -           Next Sequential Instruction after SPKA
NSI+1             D -           another NSI instruction
target              D A T B X W   branch target instruction
```

Case 2 is similar to case 1 except the B KBDR OVERRIDE tag (versus the T KBDR OVERRIDE tag) would interfere with the target instruction D stage unless appropriately designed.

Case 3: The SPKA instruction receives an interruption (e.g., priv-op)

```
SPKA0   D A T B X W 1 2                  pipe enter special states after
SPKA1     D A T B X X -                  interruption detected in SPKA0
NSI         D A T B B -                  W stage; SPKA1 does not make it
NSI+1         D A T T -                  to W stage so PSW key not updated
NSI+2           D A A -
NSI+3             D D -
rupt flow               C D A T B X W    interruption processing flow
```

In Case 3, the SPKA instruction is executed at a moment in time prohibited by the ESA/390 architecture. This condition is acted on in the W stage of the first SPKA flow and the pipeline enters special interruption handling states. Eventually, a rupt flow goes down the pipe in order to process the condition. This flow and all subsequent flows must use the unmodified PSW key, PSW KEY$_A$. The next sequential instruction (NSI) to NSI+3 instructions will use the projected key but these instructions are suppressed because of the interruption.

Case 4: Back-to-back SPKA instructions

```
SPKA0   D A T B X W                      first SPKA instruction
SPKA1     D A T B X W
SPKA0       D A T B X W                  second SPKA instruction
SPKA1         D A T B X W
NSI           D A T B X W
NSI+1           D A T B X W
NSI+2             D A T B X W
NSI+3               D A T B X W
NSI+4                 D A T B X W
NSI+5                   D A T B X W
```

In Case 4, the first SPKA1 flow will write the KBDR with its projected access key. The second SPKA1 flow will write the KBDR with its projected access key. The instructions following the second SPKA instruction will use the second SPKA's projected key until the W stage of the second SPKA1 flow by which time the PSW key will reflect the second SPKA's projected key. However, the first SPKA's projected key will be effective from the first SPKA1 A stage until the second SPKA1 A stage when it is modified again. Thus, the only instruction affected by the first SPKA's projected key is the second SPKA instruction which is not relevant since it does not access storage. NSI+5 will use the PSW KEY$_A$ which will then have the second SPKA instruction's projected key, PSW KEY$_N$, stored into it.

Case 5: Near back-to-back SPKA instructions

```
SPKA0   D A T B X W                      first SPKA instruction
SPKA1     D A T B X W
NSI       D A T B X W
SPKA0       D A T B X W                  second SPKA instruction
SPKA1         D A T B X W
NSI2            D A T B X W
NSI2+1            D A T B X W
NSI2+2              D A T B X W
NSI2+3                D A T B X W
NSI2+4                  D A T B X W
NSI2+5                    D A T B X W
```

In Case 5, "any one of A, T, B, X, or W KBDR OVERRIDE" will be true from the first SPKA's A stage through to the second SPKA's W stage. Thus, the KBDR will be the source of the access key in this time frame. The NSI instruction will use the KBDR value loaded by the first SPKA instruction. The NSI2 instruction and beyond will use the KBDR value that was loaded by the second SPKA instruction. NSI2+5 will use the PSW UC which will then have the second SPKA's projected key stored into it.

Case 6: Branch instruction between SPKA instructions; early taken branch

```
SPKA0   D A T B X W                     first SPKA instruction
SPKA1     D A T B X W
NSI         D A T B X W
BC            D A T B X W               branch instruction
SPKA0           D A T -                 branch around second SPKA
SPKA1             D A -
NSI2                D -
target                D A T B X W
```

In Case 6, the NSI instruction will use the first SPKA's projected key in the KBDR as per prior discussion. The second SPKA instruction will load a new projected key into the KBDR but the projected key will not be loaded into the PSW $KEY_A$ since the second SPKA does not complete due to the branch instruction. By the D stage of the target instruction, "any of A, T, B, X or W KBDR OVERRIDE" is not true so the PSW KEY is selected. At this moment in time, the PSW KEY contains the key value set from the first SPKA instruction.

Case 7: Branch instruction between SPKA instructions; early taken branch

```
SPKA0   D A T B X W                     first SPKA instruction
SPKA1     D A T B X W
BC          D A T B X W                 branch instruction
SPKA0         D A T -                   branch around second SPKA
SPKA1           D A -
NSI               D -
target              D A T B X W
target+1              D A T B X W
```

In Case 7, the first SPKA instruction will load its projected key into the KBDR. The second SPKA instruction will load a new projected key into the KBDR but the projected key will not be loaded into the PSW $KEY_A$ since the second SPKA does not complete due to the branch instruction. However, in the D cycle of the target instruction, W KBDR OVERRIDE is asserted from the first SPKA instruction so the target will use the key in the KBDR since it is not yet available in the PSW $KEY_A$. But the key in the KBDR now contains the value that was projected by the second SPKA instruction, not the first. The same problem occurs in the case where the NSI instruction falls between the BC instruction and the second SPKA instruction. It is circumvented by selecting the KBDR value from an alternate source, RRout, to cover this condition. That alternate source is the Result Register which, at this moment in time, contains the key from the first SPKA instruction that is in the process of being loaded into the PSW $KEY_A$. The equation used to select the key from the Result Register instead of the KBDR is:

$$\text{W KBDR OVERRIDE} * \text{W VALID} * ((\text{A KBDR OVERRIDE} * \text{not A VALID}) + (\text{B KBDR OVERRIDE} * \text{not B VALID}))$$

In FIG. 1, a computer system is provided having instructions, $I_1$, $I_2$, $I_3$, ..., $I_J$ where "J" is an integer, executed in a plurality of pipe-line segments, including at least the segments $S_1$, $S_2$, ..., $S_K$, ..., $S_W$ where "K" and "W" are integers. In the embodiment described, the segments are P, A1, T1, B1, $R_7$, D, A2, T2, B2, X, and W corresponding to $S_1$, $S_2$, ..., $S_K$, ..., $S_W$, respectively, so that $S_K$ corresponds to A2 and $S_W$ corresponds to W. The computer system has a program status word including a key for indicating the current program having control of the computer system and has a SPKA instruction for setting the key from a current value $KEY_A$ to a new value $KEY_A$ after execution of the segment $S_W$. The computer system has control means in the SU OP Pipe 12 for referencing the key to control operation of said computer system.

The current-bey store means is the key register 90 in the SU OP Pipe 12 for storing the current key $KEY_A$ in the segment $I_W$.

The new-bey store means is the KBDR register in FIG. 5 for storing the new key $KEY_N$ in the segment $I_J$, before the segment $I_W$. The selection means 109 in FIG. 5 is for selecting the new key $KEY_N$ or the current key $KEY_A$ as the selected key $KEY_S$. The control logic 107 is operable over the segments $S_K$, ..., $S_W$ to control said selection means 109 to select the new key $KEY_N$ or the current key $KEY_A$ as the selected key $KEY_S$.

While the invention has been particularly shown and described with reference to preferred embodiments thereof it will be understood by those skilled in the art that various changes in form and details may be made therein without departing from the spirit and scope of the invention.

## Claims

1. A computer system having instructions, $I_1$, $I_2$, $I_3$, ..., $I_J$ where "J" is an integer, executed in a plurality of pipeline segments, including at least the segments $S_1$, $S_2$, ..., $S_K$, ..., $S_W$ where "K" and "W" are integers, having a program status word including a key for indicating the current program having control of the computer system, having an instruction for setting said key from a current value $KEY_A$ to a new value $KEY_N$ after execution of the segment $S_W$, control means for referencing said key to control operation of said computer system comprising:

   current-key store means for storing the current key $KEY_A$ in the segment $S_W$,

   new-key store means for storing the new key $KEY_N$ in the segment $I_J$, before the segment $I_W$,

   selection means for selecting the new key $KEY_N$ or the current key $KEY_A$ as the selected key $KEY_S$,

   control logic operable over the segments $S_K$, ..., $S_W$ to control said selection means to select the new key $KEY_N$ or the current key $KEY_A$ as the selected key $KEY_S$.

2. The computer system of Claim 1 including a trigger in each segment from the segments $S_K$, ..., $S_W$ for storing a condition for indicating whether new key $KEY_N$ or the current key $KEY_A$ is to be the selected key $KEY_S$, said triggers connected to signal said control logic.

3. The computer system of Claim 1 including a plurality of instruction stream latches, each latch for storing flags indicating that fetch protection is active for a corresponding stream,

   means for sensing said flags to indicate when a fetched instruction for a stream is subject to key protection and said new key $KEY_N$ has not been used whereby said fetched instruction must be refetched using said new key $KEY_N$.

4. The computer system of Claim 1 wherein said plurality of pipeline segments include the segments D, A, T, B, X, and W wherein said D stage collates information to reference storage, wherein the A, T, and B stages fetch operands/data using the key $KEY_S$, wherein the X segment performs executions, and wherein the W segment writes results.

5. The computer system of Claim 1 including indicating means for indicating when fetch protection is active for a stream,

   sense means responsive to said indicating means for sensing when a fetched instruction for a stream is subject to key protection and said new key $KEY_N$ has not been used whereby said fetched instruction must be refetched using said new key $KEY_N$.

6. A computer system having instructions executed in a plurality of pipeline segments having a program status word including a key for indicating the current program having control of the computer system, having an instruction for setting said key from a current value $KEY_A$ to a new value $KEY_N$ after execution of the segment $S_W$, control means for referencing said key to control operation of said computer system comprising:

   current-key store means for storing the current key $KEY_A$ in a particular segment,

   new-key store means for storing the new key $KEY_N$ in a segment before the particular segment,

   selection means for selecting the new key $KEY_N$ or the current key $KEY_A$ as the selected key $KEY_S$,

   control logic operable over the segments to control said selection means to select the new key $KEY_N$ or the current key $KEY_A$ as the selected key $KEY_S$.

**FIG. 1**

FIG 2

FIG 3 | FIG 4

FIG.—2

FIG.—3

SU I-FETCH PIPE

FIG.—4

FIG. 5

FIG. 6

25